**Europäisches Patentamt**

**European Patent Office**

**Office européen des brevets**

(11) Veröffentlichungsnummer : **0 192 799**
**B1**

# EUROPÄISCHE PATENTSCHRIFT

(45) Veröffentlichungstag der Patentschrift :
20.01.88

(21) Anmeldenummer : 85102310.1

(22) Anmeldetag : 01.03.85

(51) Int. Cl.⁴ : **G 01 M 15/00**, G 01 L   3/22

(54) **Verfahren zum Betreiben eines Prüfstandes für Kraftmaschinen, Leistungsbremse und Vorrichtung hierzu.**

(43) Veröffentlichungstag der Anmeldung :
03.09.86 Patentblatt 86/36

(45) Bekanntmachung des Hinweises auf die Patenterteilung : 20.01.88 Patentblatt 88/03

(84) Benannte Vertragsstaaten :
AT DE GB IT

(56) Entgegenhaltungen :
DE-A- 2 057 347
DE-A- 2 543 940
MESSTECHNIK, Band 80, Heft 12, Dezember 1972, Seite 59, München, DE; "Drehzahl-Drehmoment-Messeinrichtung"

(73) Patentinhaber : **CARL SCHENCK AG**
**Landwehrstrasse 55 Postfach 40 18**
**D-6100 Darmstadt (DE)**

(72) Erfinder : **Dodt, Hans-Walter, Dipl.-Ing.**
**An der Buche 12**
**D-6109 Mühltal (DE)**

(74) Vertreter : **Dallhammer, Herbert, Dipl.-Ing.**
**CARL SCHENCK AG Patentabteilung Postfach 4018**
**Landwehrstrasse 55**
**D-6100 Darmstadt (DE)**

## Beschreibung

Die Erfindung betrifft ein Verfahren zum Betreiben eines Prüfstandes für Kraftmaschinen mit einer die Leistung der Kraftmaschinen aufnehmenden Leistungsbremse, mit Welle und Kupplungsflansch für eine die Kraftmaschine und die Leistungsbremse verbindende Welle mit Dämpfer wobei die zugelassene Meßdrehzahl der Leistungsbremse abhängig von einem am Kupplungsflansch auftretenden zugelassenen Zusatzgewicht ist, insbesondere Prüfstand für Verbrennungskraftmaschinen.

Bei der Entwicklung von Kraftmaschinen insbesondere Brennkraftmaschinen, die einen relativ hohen Ungleichformigkeitsgrad aufweisen, sind Einrichtungen erforderlich, mit denen die dynamischen Verhältnisse am Motor, wie dessen dynamisches Wellendrehmoment untersucht werden können. Dies geschieht im allgemeinen in Leistungsprüfstanden für Kraftmaschinen, in welchen die Kraftmaschine über eine Verbindungswelle mit einer pendelnd gelagerten Leistungsbremse verbunden ist. Dabei kann es sich bei der Leistungsbremse um eine elektrische Wirbelstrombremse, eine hydraulische Wasserwirbelstrombremse oder eine Gleichstrommaschine handeln, die pendelnd gelagert das Drehmoment der zu untersuchenden Kraftmaschine, beispielsweise einer Brennkraftmaschine in Form einer Kraftmessung an einem bestimmten Hebelarm unter Berucksichtigung der Drehzahl messen.

Nachdem die über eine Kupplung verbundenen Leistungsbremsen und Brennkraftmaschinen schwingende Systeme darstellen, besteht insbesondere bei der Bestimmung des dynamischen Wellendrehmoments an der Ausgangswelle bzw. der Schwungscheibe der zu untersuchenden Brennkraftmaschine die Gefahr, daß Torsionsschwingungen auftreten, die zur Zerstörung der Verbindungswelle führen.

Zur Vermeidung von kritischen Torsionsschwingungen werden drehelastische und dämpfende Kupplungswellen verwendet, die zwischen Leistungsbremse und Brennkraftmaschine angeordnet werden. Derartige drehelastische und dämpfende Kupplungswellen sind jedoch zufolge ihrer Empfindlichkeit gegenüber Radial- und Winkelversatz hohem Verschleiß unterworfen, wenn die Wellen von Leistungsbremse und zu untersuchender Brennkraftmaschine einen geringfugigen Versatz aufweisen. Auch ist der Drehzahlbereich, in dem diese Kupplungswellen eingesetzt werden konnen, oft nicht ausreichend.

Zur Aufnahme des dynamischen Wellendrehmomentes werden auch Drehmomentmeßwellen direkt zwischen Brennkraftmaschine und Leistungsbremse eingebaut. Wegen der Amplitudenüberhöhung im torsionskritischen Drehzahlbereich muß die Drehmomentmeßwelle jedoch um ein Vielfaches uberdimensioniert werden. Dies führt dazu, daß die geforderte Meßgenauigkeit nicht erreicht werden kann.

Um die Überdimensionierung der Drehmomentmeßwelle zu vermeiden, kann ein elastisches und dämpfendes Element zwischen zu untersuchenden Motor und Drehmomentmeßwelle eingebaut werden. Auch eine derartige Anordnung läßt die zu fordernde Meßgenauigkeit bei der Bestimmung des dynamischen Wellendrehmomentes nicht erreichen, da die im elastischen und dämpfenden Element in Wärmeenergie umgesetzte mechanische Energie von der Drehmomentmeßwelle nicht erfaßt wird.

Das federnde und dämpfende Element kann jedoch auch zwischen Drehmomentmeßwelle und Leistungsbremse eingebaut werden. Durch das zusätzliche Gewicht des elastischen und dämpfenden Elements wird jedoch die biegekritische Drehzahl der Leistungsbremse beeinflußt und so weit herabgesetzt, daß das dynamische Verhalten der Brennkraftmaschine bei maximaler Drehzahl nicht mehr ermittelt werden kann.

Bei elektrischen Maschinen (Gleichstrommaschinen) als Leistungsbremsen werden Momentenrechner zur Drehmomenterfassung eingesetzt. Das Reaktionsmoment der elektrischen Maschine wird aus der Luftspaltleistung errechnet. Durch falsch eingegebene oder sich ändernde Verluste kann die geforderte Genauigkeit ebenfalls nicht erreicht werden. Es ist auch keine einfache Kalibrierung möglich.

Insbesondere bei Brennkraftmaschinen mit relativ hohem Ungleichförmigkeitsgrad beispielsweise bei Ausfallen der Zündung in einem Zylinder ist eine Zerstörung der Drehmomentmeßwelle nicht auszuschließen. Aufgrund dieser Tatsache sind die Drehmomentmeßwellen, die praktisch keine Dämpfung außer der Materialdämpfung besitzen, auf die bei der torsionskritischen Drehzahl auftretenden Amplitudenüberhöhungen auszubilden. Hieraus erfolgt zwangsläufig eine Verschlechterung der Meßgenauigkeit.

Um das dynamische Wellendrehmoment einer Brennkraftmaschine möglichst genau zu erhalten, also die Meßfehler zu minimieren und eine Zerstörung der Drehmomentmeßwelle zu vermeiden, ist die torsionskritische Drehzahl außerhalb des Betriebsbereiches der zu untersuchenden Kraftmaschine und möglichst unterhalb der Betriebsdrehzahl zu wählen. Damit wird das System überkritisch betrieben. Der oben bereits angedeutete Weg, durch Einbau eines federnden und dämpfenden Elements die Amplitudenüberhohung im torsionskritischen Bereich zurückzunehmen hierbei das federnde und dämpfende Element jedoch so anzuordnen, daß das dynamische Wellendrehmoment direkt von der Drehmomentmeßwelle aufgenommen wird, scheitert daran, daß zufolge Absinkens der biegekritischen Drehzahl einer für die maximale Motorendrehzahl ausgelegten Leistungsbremse für die Bestimmung des dynamischen Wellendrehmoments bei der maximalen Drehzahl nicht mehr verwendet werden kann. Ausgehend hiervon liegt der Erfindung die Aufgabe zugrunde, die schädlichen Einflüsse der durch die kritischen Torsionsschwingungen bedingten Amplitudenüberhöhungen auszuschalten. Diese Aufgabe wird durch das erfinderische Verfahren gemäß Kennzeichen des Anspruchs 1 gelöst. Durch das gedämpfte Einwirken des über das zugelassene Gewicht hinausgehenden Gewichtes auf das andere Ende der Welle der Leistungsbremse wird nicht nur die zugelassene biegekritische Drehzahl der Bremse nur unwesentlich beeinflußt, sondern auch die torsionskritische Drehzahl so verstimmt, das bei der Aufnahme von dynamischen Wellendrehmomenten Drehmomentwellen benutzt werden können, die wegen der kritischen Torsionsdrehzahl keiner Verstärkung wegen der dort auftretenden Amplitudenüberhöhung erfordern. Bei quasi statischen Meßvorgangen konnen zufolge der Verstimmung nunmehr darüber hinaus drehsteife Kupplungswellen verwendet werden, die gegenüber den bisher zerstörungsanfälligen drehelastischen und dämpfenden Kupplungswellen einen wesentlich höheren Radial- und Winkelversatz zwischen zu untersuchendem Motor und der Leistungsbremse erlauben. Auch läßt sich gegenüber den eingangs genannten Gleichstrommaschinen als Leistungsbremsen eine einfache dynamische Kontrolle der Kalibrierung durchführen.

Die in Anspruch 2 unter Schutz gestellte Ausgestaltung des Verfahrens stellt eine besonders vorteilhafte Verfahrensauswahl dar.

Zur Durchführung des Verfahrens wird eine Leistungsbremse mit einem auf einer im Gehäuse der Leistungsbremse gelagerten Welle angeordneten Rotor und mit einem Kupplungsflansch zur Einleitung der zu übertragenden Momente vorgeschlagen, die sich erfindungsgemäß durch die in Anspruch 3 im Kennzeichen offenbarte Merkmale erfinderisch auszeichnet. Durch die Verwendung einer Hohlwelle für den Rotor und einem Torsionsstab, der auf einer Seite einen Dämpfer trägt, der mit der Hohlwelle und damit mit dem Rotor verbunden ist, oder der ein Teil eines Drehmomentwandlers trägt, das mit einem an der Hohlwelle angeordneten anderen Teil des Drehmomentwandlers zusammenwirkt, wird sowohl das über das zugelassene Zusatzgewicht hinausgehende Gewicht am anderen Ende der Welle, die den Kupplungsflansch trägt, aufgebracht und gleichzeitig eine Dämpfung bewirkt.

Eine Ausgestaltung der erfinderischen Leistungsbremse sieht vor, daß der Torsionsstab durch Applikation von Dehnungsmeßstreifen selbst als Drehmomentwelle ausgebildet wird. Damit kommt die bisher zur Messung des dynamischen Wellendrehmoments zusätzlich erforderliche Drehmomentwelle zwischen Leistungsbremse und Kraftmaschine in Wegfall. Dies führt zu einer wesentlich kompakteren Bauweise eines derartigen Prüfstandes und verringert gleichzeitig wesentlich die Kosten da keine zusätzlichen Zwischenkupplungen verwendet werden müssen.

In Anspruch 5 wird eine besondere Ausgestaltung der Lagerung des Torsionsstabes in der Hohlwelle unter Schutz gestellt. Die weitgehend reibungsfreie Bewegung des Torsionsstabes durch die auf ihn einwirkenden Drehmomente kann vorteilhaft durch ein Kugelgelenk bewirkt werden.

Zur Durchführung des erfinderischen Verfahrens ist auch eine Leistungsbremse geeignet, bei der erfindungsgemäß im Kennzeichen des Anspruchs 6 unter Schutz gestellt die Hohlwelle und der am Torsionsstab angeordnete Kupplungsflansch getrennt voneinander im Gehause der Leistungsbremse gelagert sind. Hierdurch ergibt sich durch Verkürzung der Hohlwelle im Hinblick auf die zugelassene biegekritische Drehzahl eine noch weitere Erhöhung dieser, so daß auch im Hinblick auf dieses Kriterium eine noch weitere Steigerung in der Leistungsfähigkeit der Leistungsbremsen gegenüber den bisher verwendeten Leistungsbremsen erreicht wird, was zu einer beachtlichen Kostenersparnis bei derartigen Prüfständen führt.

Vorgegebene Prüfprogramme für Drehzahländerungen beispielsweise von der Leerlaufdrehzahl bis zur Maximaldrehzahl, Schaltvorgänge, Beschleunigungs- und Verzögerungsvorgänge die kontinuierlich den zu untersuchenden Motor beaufschlagen sind durchführbar.

Ein Prüfstand zur Durchführung des erfindungsgemaßen Verfahrens mit einer erfindungsgemäßen Leistungsbremse zeichnet sich durch die pendelnde Aufstellung der Leistungsbremse und durch die Verwendung einer drehsteifen Kupplung zwischen Leistungsbremse und zu untersuchender Kraftmaschine aus. Hierbei konnte erst durch die erfindungsgemäße Leistungsbremse die kritische Drehzahl für Torsionsschwingungen soweit herabgesetzt werden, daß gefahrlos drehsteife Kupplungen, Kreuzgelenkwellen, ohne Gefahr verwendet werden können. Gegenüber den bisher verwendeten dampfenden Kupplungswellen, Elastikgelenkwellen, sind diese im Hinblick auf Radial- und Winkelversatz zwischen Leistungsbremse und zu prüfender Kraftmaschine wesentlich unempfindlicher, so daß der Verschleiß der Kupplungen, der allein durch den Versatz bisher aufgetreten ist nicht mehr vorhanden ist. Dies führt zu einer Verkürzung der Taktzeit bei der Prüfung von Motoren im Herstellungszyklus von Kraftfahrzeugen.

In Anspruch 8 ist ein Prüfstand zur Durchführung des erfinderischen Verfahrens unter Verwendung der erfinderischen Leistungsbremse unter Schutz gestellt, bei dem die Leistungsbremse fest aufgestellt ist, und die Drehmomentmeßwelle, bei der es sich auch um den erfindungsgemäßen Torsionsstab innerhalb der Leistungsbremse handeln kann, mit der zu untersuchenden Kraftmaschine verbunden ist. Dieser Prüfstand ist zur Messung des dynamischen Wellendrehmoments von Kraftmaschinen besonders geeignet und er läßt auch eine Kontrolle der Kalibrierung im Betrieb zu, wenn die arretiert aufgestellte Leistungsbremse erfindungsgemäß entarretiert wird also gegenüber der Drehmomentmeßwelle sich pendelnd bewegen kann. Damit kann bei vorgegebener Drehzahl und vorgegebenem Drehmoment die Kraftwirkung des Moments auf die Leistungsbremse bestimmt werden und somit eine Kontrolle der Kalibrierung im Betrieb durchgeführt werden, die bisher nicht möglich ist. Die bisherige Kontrolle der Kalibrierung geschieht im Stillstand.

In den nachfolgenden Zeichnungen wird die Erfindung näher erläutert.

Es zeigen :

Figur 1 schematisch einen erfindungsgemäßen Prüfstand mit erfindungsgemäßer Leistungsbremse und einer Kraftmaschine zur Erläuterung des erfindungsgemäßen Verfahrens,

Figur 2 in vergrößertem Maßstab eine erfindungsgemäße Hohlwelle mit einem erfindungsgemäßen Torsionsstab mit Lagerung,

Figur 3 in vergrößertem Maßstab eine Lagerung von Hohlwelle und Torsionsstab bei Verwendung eines Drehmomentwandlers.

Gleiche Bauteile werden in den einzelnen Figuren mit denselben Bezugsziffern bezeichnet.

Ein Fundament 1, welches Aufnahmen für eine zu untersuchende Kraftmaschine 2 und Aufnahmen für eine Leistungsbremse 3 besitzt, ist entweder einstückig mit dem Hallenboden 4 hergestellt, oder durch Schrauben mit diesem verbunden. Das Fundament 1 mit seinen Aufnahmen dient zur Ausrichtung der Kraftmaschine 2 zur Leistungsbremse 3. Wenn es sich bei den Kraftmaschinen 2 um Brennkraftmaschinen handelt, ist es ersichtlich, daß zufolge entsprechender Gehäusetoleranzen die Achse 5 einer Schwungscheibe 6 von Brennkraftmaschine zu Brennkraftmaschine eine verschiedene Höhe zum Fundament 1 einnimmt. Dies führt, wie einleitend bereits ausgeführt, zwangsläufig zu einem Radial- und Winkelversatz gegenüber der Wellenachse 7 der ebenfalls auf dem Fundament 1 fest verankerten Leistungsbremse 3. Wie bereits ausgeführt, führt dieser Versatz beim Stand der Technik zur Zerstörung der dort wegen der torsionskritischen Schwingungen eingesetzten dämpfenden Kupplungswellen.

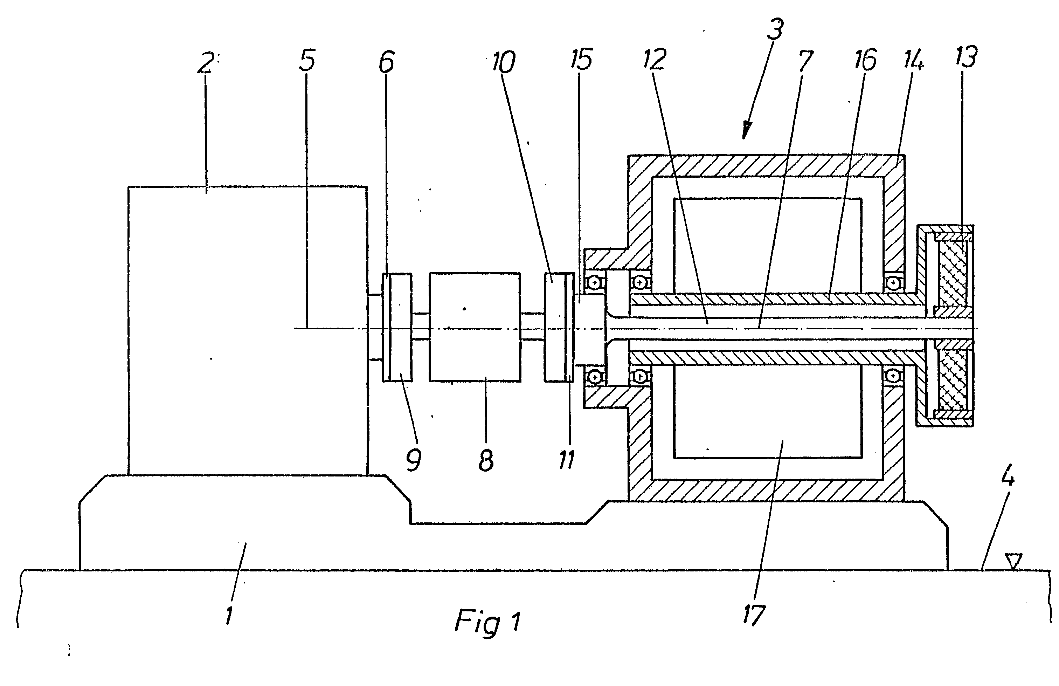

Im Ausführungsbeispiel nach Figur 1 ist die Leistungsbremse 3 über eine Drehmomentmeßwelle 8 mit der Kraftmaschine 2 verbunden. Die Drehmomentmeßwelle 8 ist über einen Schwungscheibenflansch 9 einerseits mit der Schwungscheibe 6 verbunden und über einen zweiten Flansch 10 mit einem Anschlußflansch 11 der Leistungsbremse 3 verbunden.

Das Ausführungsbeispiel gemäß Figur 1 zeigt also einen Prüfstand ausgerüstet zur Messung des dynamischen Wellendrehmoments mit einer Drehmomentmeßwelle 8. Diese Drehmomentmeßwelle 8 kann jedoch auch erfindungsgemäß durch einen in der Leistungsbremse 3 enthaltenen Torsionsstab 12 ersetzt werden, der auf seiner einen Stirnseite den Anschlußflansch 11 trägt und an dessen anderer Stirnseite im Ausführungsbeispiel nach Figur 1 ein Dämpfer 13 angeordnet ist. In diesem Falle wäre der Torsionsstab 12 beispielsweise mit Dehnmeßstreifen zur Messung der Torsion des Torsionsstabes zufolge des von der Kraftmaschine 2 eingeleiteten Moments appliziert. Im Falle der Verwendung des Torsionsstabes 12 als Drehmomentmeßwelle würde der Anschlußflansch 11 direkt z. B. durch eine Kreuzgelenkwelle mit der Schwungscheibe 6 verbunden.

Der in Figur 1 dargestellte Prüfstand ist jedoch auch für die Durchführung statischer Messungen geeignet, wenn anstelle der Drehmomentmeßwelle 8 zwischen die Schwungscheibe 6 und dem Anschlußflansch 11 eine drehsteife Kupplungswelle beispielsweise eine Kreuzgelenkwelle eingebaut würde. In diesem Falle wäre die Leistungsbremse 3 pendelnd gelagert aufzustellen. Unter pendelnder Lagerung wird in diesem Falle verstanden, daß sich das Gehäuse 14 der Leistungsbremse 3 unter Zwischenschaltung eines Kraftmeßgliedes beispielsweise einer Kraftmeßdose am Fundament 1 abstützt. Wird nun von der Kraftmaschine 2 über die zwischen Schwungscheibe 6 und Anschlußflansch 11 angeordnete Kreuzgelenkwelle ein Drehmoment bei vorgegebener Drehzahl in die Leistungsbremse eingeleitet, so wird das Gehäuse 14 der Leistungsbremse 3 um die Wellenachse eine Drehung erfahren, die als Kraftwirkung in ein Kraftmeßglied beispielsweise eine Kraftmeßdose so lange eingeleitet wird, bis Gleichheit zwischen der an einem bestimmten Hebelarm wirkenden Kraft und dem eingeleiteten Drehmoment besteht. Mit Hilfe der Drehzahl und der gemessenen Kraftwirkung an einem bestimmten Hebelarm kann dann die Leistung der zu untersuchenden Kraftmaschine bestimmt werden.

Im Ausführungsbeispiel gemäß Figur 1 ist der Torsionsstab 12 über ein Vielnutprofil in einem Kupplungsflansch 15 im Gehäuse 14 gelagert. Eine Hohlwelle 16 trägt den Rotor 17 der Leistungsbremse 3. Im Ausführungsbeispiel nach Figur 1 ist schematisch eine elektrische Wirbelstrombremse als Leistungsbremse dargestellt. Anstelle dieser können jedoch auch elektrische Maschinen z. B. Gleichstrommaschinen als Leistungsbremsen oder Wasserwirbelbremsen eingesetzt werden.

Die Hohlwelle 16 ist getrennt vom Kupplungsflansch 15 auf der einen Seite der Leistungsbremse 3 gelagert und zum anderen gelagert auf der anderen Seite ebenfalls im Gehäuse 14 der Leistungsbremse 3. Der Torsionsstab 12 erstreckt sich durch die Hohlwelle 16 und ist über dem Dampfer 13 mit der Hohlwelle 16 verbunden. In diesem Falle trägt die Torsionswelle 12 keine weitere Lagerung, die sie gegen die Hohlwelle 16 abstützt.

Durch die getrennte Lagerung von Kupplungsflansch 15 und Hohlwelle 16 auf der einen Seite der Leistungsbremse wird eine Verkürzung der Hohlwelle erreicht, was zu einer Erhöhung der biegekritischen Drehzahl führt. Wie in Figur 1 dargestellt, wird der Kupplungsflansch 15 durch die Drehmomentmeßwelle belastet. Durch die Anordnung des Dämpfers 13 am entgegengesetzten Ende von Hohlwelle 16 und Torsionsstab 12 wird sowohl ein Gewicht zur Einwirkung gebracht, welches beispielsweise gleich dem Gewicht ist, das über das zugelassene Zusatzgewicht auf der Kupplungsseite hinausgeht als auch am Ort des Einleitens des Gewichtes eine Dämpfung bewirkt, die zu einer Erniedrigung der torsionskritischen Drehzahl des Zwei-Massensystems führt. Bei Verwendung des dargestellten Dämpfers wird die Maschine im Hinblick auf die kritische Torsionsdrehzahl überkritisch betrieben. Ein derartiger überkritischer Betrieb ist insbesondere bei Kraftmaschinen von Vorteil die einen relativ hohen Ungleichförmigkeitsgrad wie ein- oder mehrzylindrige Brennkraftmaschinen, bei denen die Gefahr des Ausfalls eines Zylinders möglich ist, darstellen.

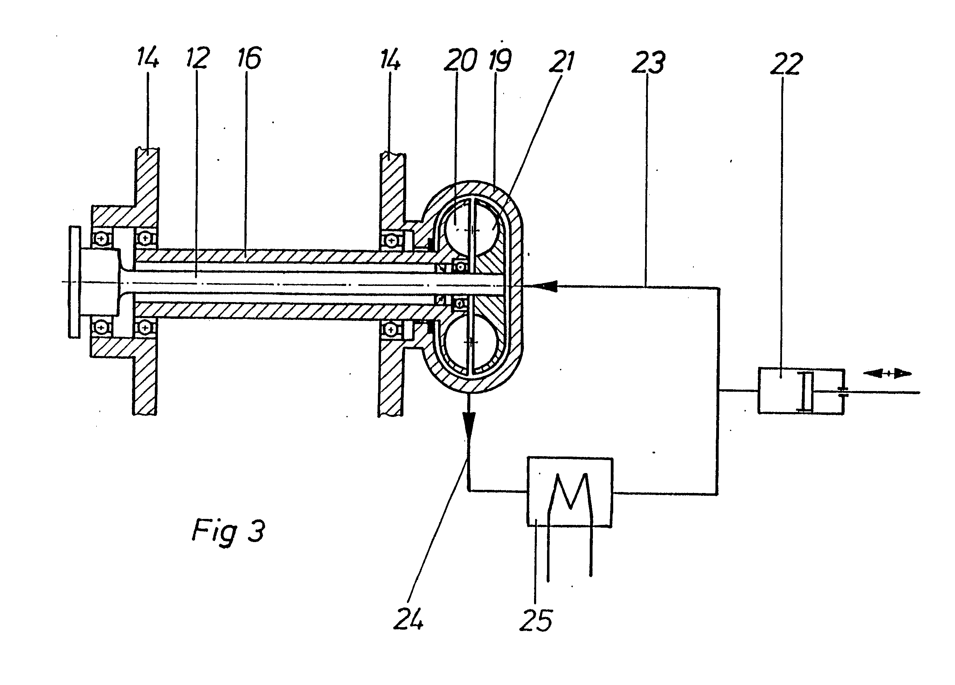

Wird anstelle des Dämpfers 13 ein Wandler wie in Figur 3 dargestellt verwendet, so wird die Maschine in Bezug auf die kritische Torsionsdrehzahl unterkritisch betrieben.

Der dargestellte Prüfstand ist zur Messung des dynamischen Wellendrehmoments geeignet, wobei die Leistungsbremse 3 nur noch zur Umwandlung der Energie dient. Soll nunmehr die Kalibrierung der Leistungsbremse kontrolliert werden, läßt sich beim Lauf des Prüfstandes eine Kontrolle durchführen, d. h. bei vorgegebener Drehzahl und vorgegebenem Moment durch die Kraftmaschine durchführen. Dies gilt auch, wenn der in der Leistungsbremse vorhandene Torsionsstab als Drehmomentmeßwelle benutzt wird.

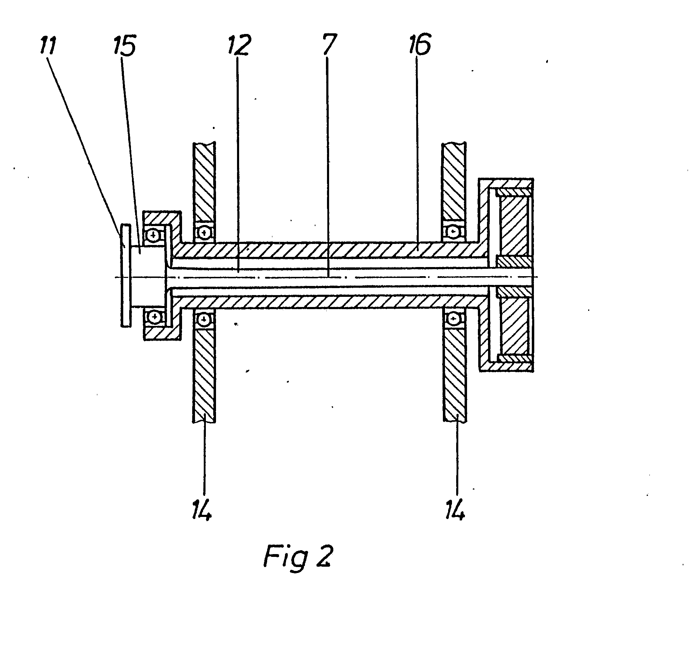

Figur 2 zeigt die Ausgestaltung des Torsionsstabs 12 als Drehmomentmeßwelle. Hierbei ist der Torsionsstab 12 innerhalb der Hohlwelle 16 weitgehend reibungsfrei gelagert. Wie in dieser Figur dargestellt, wird die Hohlwelle 16 zusätzlich durch die Drehmomentmeßwelle 8 belastet. Dies führt zu einer Erniedrigung der biegekritischen Drehzahl des Systems, Hohlwelle mit den einwirkenden Massen des Rotors 17 und Kupplungsflansch 15, 11. Durch die Anordnung des Dämpfers 13 am entgegengesetzten Ende von Hohlwelle 16 und Torsionsstab 12 wird sowohl ein Gewicht zur Einwirkung gebracht, welches beispielsweise gleich dem Gewicht ist, das über das zugelassene Zusatzgewicht auf der Kupplungsseite hinausgeht als auch am Ort des Einleitens des Gewichtes eine Dämpfung bewirkt, die zu einer Erniedrigung der torsionskritischen Drehzahl führt.

Bei Verwendung eines Wandlers anstelle des Dampfers läßt sich auch durch Änderung des Füllungsgrades die Leistungsbremse bei einer niederen Drehzahl fahren als die zu untersuchende Arbeitsmaschine.

In Figur 3 ist ein Drehmomentwandler 19 mit dem Gehäuse 14 verbunden. Die Hohlwelle 16 ist mit dem Turbinenteil 20 des Drehmomentwandlers 19 verbunden, während der Torsionsstab 12 mit dem Pumpenteil 21 des Drehmomentwandlers 19 verbunden ist.

Durch Änderung des Füllungsgrades des Drehmomentwandlers wird die Drehzahldifferenz zwischen Leistungsbremse und zu untersuchender Kraftmaschine vorgegeben. Hierdurch wird es auf besonders einfache Weise möglich, beispielsweise bei Verwendung einer Gleichstrommaschine als Leistungsbremse, die zu untersuchende Kraftmaschine mit höherer Drehzahl als die Gleichstrommaschine laufen zu lassen. Damit wird durch die Erfindung der weitere Vorteil erreicht, daß Gleichstrommaschinen mit normaler Nenndrehzahl als Leistungsbremsen für hochtourige Kraftmaschinen eingesetzt werden können. In Figur 3 ist schematisch die Befüllung des Drehmomentwandlers 19 dargestellt. Von einem Speicher 22 wird über eine Leitung 23 die entsprechende Flüssigkeitsmenge dem Drehmomentwandler eingeführt. Über eine Rücklaufleitung 24 wird ein geschlossener Kreislauf erreicht. Entsprechend der vorgegebenen Drehzahldifferenz kann vom Speicher 22 mehr oder weniger Flüssigkeit in den Kreislauf eingespeist werden. Im Falle einer geringeren Befüllung wird beispielsweise aus dem Kreislauf in den Speicher 22 eine Flüssigkeitsmenge zurückgespeist. Bevorzugt ist in diesem Kreislauf noch ein Wärmetauscher 25 angeordnet, der die vom Wandler erzeugte Wärme an das Kühlwasser abgibt.

**Patentansprüche**

1. Verfahren zum Betreiben eines Prüfstandes für Kraftmaschinen (2) mit einer die Leistung der Kraftmaschine (2) aufnehmenden Leistungsbremse (3), mit Welle und Kupplungsflansch für eine die Kraftmaschine (2) und die Leistungsbremse (3) verbindende Welle mit Dämpfer, wobei die zugelassene Meßdrehzahl der Leistungsbremse (3) abhängig von einem am Kupplungsflansch auftretenden zugelassenen Zusatzgewicht ist, insbesondere Prüfstand für Verbrennungskraftmaschinen, dadurch gekennzeichnet, daß ein über das zugelassene Zusatzgewicht hinausgehendes Gewicht auf das andere Ende der Welle der Leistungsbremse (3) einwirkt und daß an dieser Stelle gleichzeitig eine Dämpfung bewirkt wird.

2. Verfahren nach Anspruch 1, dadurch gekennzeichnet, daß das über das zugelassene Gewicht hinausgehende Gewicht gleich ist dem zugelassenen Zusatzgewicht.

3. Leistungsbremse zur Durchführung des Verfahrens nach Anspruch 1 und/oder 2 mit einem auf einer im Gehäuse (14) der Leistungsbremse (3) gelagerten Welle angeordneten Rotor (17) und mit einem Kupplungsflansch (15) zur Einleitung der zu übertragenden Momente, dadurch gekennzeichnet, daß die Welle eine Hohlwelle (16) ist, daß an der Hohlwelle (16) ein Dämpfer (13) oder ein Teil eines Drehmomentwandlers angreift, daß an einem Ende eines in der Hohlwelle (16) verlaufenden Torsionsstabes (12) der Dämpfer (13) oder der andere Teil des Drehmomentwandlers angeordnet ist, und daß am anderen Ende des Torsionsstabes (12) der Kupplungsflansch (15) angeordnet ist und daß der Kupplungsflansch (15) in der im Gehäuse (13) gelagerten Hohlwelle (16) gelagert ist.

4. Leistungsbremse nach Anspruch 3, dadurch gekennzeichnet, daß der Torsionsstab (12) durch Applikation von Meßstreifen als Drehmomentmeßwelle ausgebildet ist.

5. Leistungsbremse nach Anspruch 3 und 4, dadurch gekennzeichnet, daß die Lagerung des Torsionsstabs (2) in der Hohlwelle eine weitgehend reibungsfreie Bewegung des Torsionsstabes (12) innerhalb der Hohlwelle zuläßt.

6. Leistungsbremse zur Durchführung des Verfahrens nach Anspruch 1 und/oder 2 mit einem auf einer im Gehäuse (14) der Leistungsbremse 3 gelagerten Welle angeordneten Rotor (17) und mit einem Kupplungsflansch (15) zur Einleitung der zu übertragenden Momente, dadurch gekennzeichnet, daß die Welle eine Hohlwelle (16) ist, daß an der Hohlwelle (16) ein Dämpfer (13) oder ein Teil eines Drehmomentwandlers gelagert angreift, daß an einem Ende eines in der Hohlwelle (16) verlaufenden Torsionsstabs (12) der Dämpfer (13) oder das andere Teil des Drehmomentwandlers gelagert angeordnet ist und daß die Hohlwelle (16) und der am Torsionsstab (12) angeordnete Kupplungsflansch (15) getrennt voneinander im Gehäuse (14) der Leistungsbremse gelagert sind.

7. Prüfstand zur Durchführung des Verfahrens nach Anspruch 1 und/oder 2 und mit einer Leistungsbremse nach Anspruch 3 bis 5, oder Anspruch 6, dadurch gekennzeichnet, daß die Leistungsbremse pendelnd aufgestellt ist und daß eine drehsteife Kupplung die Leistungsbremse mit der zu untersuchenden Kraftmaschine verbindet.

8. Prüfstand zur Durchführung des Verfahrens nach Anspruch 1 und/oder 2 und mit einer Leistungsbremse nach den Ansprüchen 3 bis 5, oder Anspruch 6, dadurch gekennzeichnet, daß die Leistungsbremse arretiert aufgestellt ist und daß eine mit Flanschen versehene Drehmomentwelle die Leistungsbremse mit der zu untersuchenden Kraftmaschine verbindet.

## Claims

1. Method for the operation of a test stand for power engines (2) with a dynamometrical brake (3) taking up the power of the power engine (2), with a shaft and coupling flange for a shaft, connecting the power engine (2) and the dynamometrical brake (3), with damper, in which the permitted measurement rotation speed of the dynamometrical brake (3) is dependent on a permitted additional weight occurring on the coupling flange, in particular a test stand for internal combustion engines, characterized in that a weight exceeding the permitted additional weight acts on the other end of the shaft of the dynamometrical brake (3) and that at this point at the same time a damping is brought about.

2. Method according to Claim 1, characterized in that the weight exceeding the permitted weight is equal to the permitted additional weight.

3. Dynamometrical brake to carry ouf the method according to Claim 1 and/or 2 with a rotor (17) arranged on a shaft mounted in the housing (14) of the dynamometrical brake (3), and with a coupling flange (15) to introduce the moments to be transferred, characterized in that the shaft is a hollow shaft (16), that a damper (13) or a part of a rotational moment converter engages on the hollow shaft (16), that at one end of a torsion rod (12) running in the hollow shaft (16) the damper (13) or the other part of the rotational moment converter is arranged, and that at the other end of the torsion rod (12) the coupling flange (15) is arranged and that the coupling flange (15) is mounted in the hollow shaft (16) which is mounted in the housing (13).

4. Dynamometrical brake according to Claim 3, characterized in that the torsion rod (12) is constructed as a rotational moment measurement shaft through application of measurement strips.

5. Dynamometrical brake according to Claim 3 and 4, characterized in that the mounting of the torsion rod (12) in the hollow shaft permits a largely friction-free movement of the torsion rod (12) inside the hollow shaft.

6. Dynamometrical brake to carry out the method according to Claim 1 and/or 2 with a rotor (17) arranged on a shaft mounted in the housing (14) of the dynamometrical brake (3) and with a coupling flange (15) for the introduction of the moments to be transferred, characterized in that the shaft is a hollow shaft (16), that a damper (13) or a part of a rotational moment converter engages, mounted, on the hollow shaft (16), that at one end of a torsion rod (12) running in the hollow shaft (16) the damper (13) or the other part of the rotational moment converter is arranged so as to be mounted, and that the hollow shaft (16) and the coupling flange (15) arranged on the torsion rod (12) are mounted separately from each other in the housing (14) of the dynamometrical brake.

7. Test stand to carry out the method according to Claim 1 and/or 2 and with a dynamometrical brake according to Claim 3 to 5, or Claim 6, characterized in that the dynamometrical brake is arranged so as to be oscillating, and that a coupling, which is stiff against torsion, connects the dynamometrical brake with the power engine which is to be investigated.

8. Test stand to carry out the method according to Claim 1 and/or 2 and with a dynamometrical brake according to Claims 3 to 5, or Claim 6, characterized in that the dynamometrical brake is arranged so as to be locked and that a rotational moment shaft, provided with flanges, connects the dynamometrical brake with the power engine which is to be investigated.

## Revendications

1. Procédé pour exploiter un banc d'essai pour moteurs (2), comprenant un frein dynamométrique (3) absorbant la puissance du moteur, avec un arbre et une bride d'accouplement pour un arbre à amortisseur reliant le moteur (2) et le frein dynamométrique (3), la vitesse de rotation mesurée admissible du frein dynamométrique (3) dépendant d'un poids additionnel autorisé appliqué à la bride d'accouplement, notamment un banc d'essai pour des moteurs à combustion interne, caractérisé en ce qu'un poids qui dépasse le poids additionnel admis agit sur l'autre extrémité de l'arbre du frein dynamométrique (3) et en ce qu'un amortissement est réalisé simultanément en cet endroit.

2. Procédé selon la revendication 1, caractérisé en ce que le poids qui dépasse le poids additionnel autorisé est égal au poids additionnel autorisé.

3. Frein dynamométrique pour la mise en œuvre du procédé selon la revendication 1 et/ou 2, comprenant un rotor (17) monté sur un arbre disposé dans le boîtier (14) du frein dynamométrique (3) et une bride d'accouplement (15) pour introduire les couples à transmettre, caractérisé en ce que l'arbre est un arbre creux (16), en ce qu'un amortisseur (13) ou une partie d'un convertisseur de couple coopère avec l'arbre creux (16) en étant monté sur lui, en ce que l'amortisseur (13) ou l'autre partie du convertisseur de couple est monté à une extrémité d'une barre de torsion (12) passant par l'arbre creux (16), et en ce que la bride d'accouplement (15) est disposée à l'autre extrémité de la barre de torsion (12) et en ce que la bride d'accouplement (15) est montée dans l'arbre creux (16) montée dans le boîtier (13).

4. Frein dynamométrique selon la revendication 3, caractérisé en ce que la barre de torsion (12) est constituée sous forme d'un arbre de mesure de couple par application de bandes de mesure.

5. Frein dynamométrique selon la revendication 3 ou 4, caractérisé en ce que le montage de la barre de torsion (12) dans l'arbre creux autorise un mouvement sensiblement sans frottement de la barre de torsion (12) à l'intérieur de l'arbre creux.

6. Frein dynamométrique pour la mise en œuvre du procédé selon la revendication 1 et/ou 2, comprenant un rotor (17) monté sur un arbre disposé dans le boîtier (14) du frein dynamométrique (3) et une bride d'accouplement (15) pour introduire les couples à transmettre, caractérisé en ce que l'arbre est un arbre creux (16), en ce qu'un amortisseur (13) ou une partie d'un convertisseur de couple coopère avec l'arbre creux (16), en étant monté sur lui, en ce que l'amortisseur (13) ou l'autre partie du convertisseur de couple est monté à une extrémité d'une barre de torsion (12) passant par l'arbre creux (16), et en ce que l'arbre creux (16) et la bride d'accouplement (15) disposée sur la barre de torsion (12) sont montés de façon séparée l'un de l'autre dans le boîtier (14) du frein dynamométrique.

7. Banc d'essai pour la mise en œuvre du procédé selon la revendication 1 et/ou 2 et comprenant un frein dynamométrique selon les revendications 3 à 5, ou la revendication 6, caractérisé en ce que le frein dynamométrique est monté de façon pendulaire et en ce qu'un accouplement rigide en rotation relie le frein dynamométrique et le moteur à soumettre aux essais.

8. Banc d'essai pour la mise en œuvre du procédé selon la revendication 1 et/ou 2 et comprenant un frein dynamométrique selon les revendications 3 à 5, ou la revendication 6, caractérisé en ce que le frein dynamométrique est monté de façon fixe et en ce qu'un arbre couple muni de brides relie le frein dynamométrique et le moteur à soumettre aux essais.

Fig 1

Fig 2

Fig 3

14   12   16   14   20 19   21   23   22

24   25

0 192 799